# EUROPÄISCHE PATENTANMELDUNG

(11) **EP 3 834 687 A1**
(43) Veröffentlichungstag der Anmeldung: **16.06.2021**
(21) Anmeldenummer: 20210271.1
(22) Anmeldetag: 27.11.2020
(51) Int. Cl.: A47J 43/07, F24C 15/10

(54) **KOCHSTELLENMODUL ZUM VERBINDEN MIT EINER KÜCHENGERÄTEBASIS SOWIE KOCHSYSTEM**

(30) Priorität: 12.12.2019 DE 102019134095
(71) Anmelder: Vorwerk & Co. Interholding GmbH, 42270 Wuppertal (DE)
(72) Erfinder: BAYARD, Christian, 58456 Witten (DE)
(74) Vertreter: Patent- und Rechtsanwälte Dr. Solf & Zapf

(57) **Zusammenfassung**

Die vorliegende Erfindung betrifft ein Kochstellenmodul (1) zum Verbinden mit einer Küchengerätebasis (2).

Der Funktionsumfang von Küchengeräten wird erweitert, indem das Kochstellenmodul (1) mindestens eine Stellfläche (3) für mindestens ein Kochgefäß (9), mindestens ein elektrisches Heizmittel (4), mindestens einen Verbindungsbereich (5) zur Aufnahme an der Küchengerätebasis (2) und mindestens ein elektrisches Kontaktmittel (6) aufweist, wobei mit dem Heizmittel (4) ein auf der Stellfläche (3) positionierbares Kochgefäß (9) erwärmbar ist, und wobei das Heizmittel (4) über das elektrische Kontaktmittel (6) elektrisch mit der Küchengerätebasis (2) verbindbar ist.

## Beschreibung

Die Erfindung betrifft ein Kochstellenmodul zum Verbinden mit einer Küchengerätebasis. Ferner betrifft die Erfindung ein Kochsystem, das mindestens eine Küchengerätebasis und mindestens ein Kochstellenmodul umfasst.

Im Stand der Technik sind mobile Kochfelder bekannt, die über einen Netzstecker mit Spannung versorgbar sind, und die eine Stellfläche für mindestens ein Kochgefäß aufweisen. Es handelt sich dabei um Geräte, die nur für diesen Zweck verwendbar sind.

Ferner sind im Stand der Technik Küchengeräte bekannt, die beispielsweise einen Aufnahmebereich für ein Zubereitungsgefäß aufweisen. Das Zubereitungsgefäß verfügt über mindestens ein Heizmittel sowie elektrische Kontaktmittel zum Verbinden des Heizmittels mit der Küchengerätebasis. Ferner sind mechanische Schnittstellen vorhanden, um Drehmomente von der Küchengerätebasis auf eine in dem Zubereitungsgefäß angeordnete Rühr- und Zerkleinerungseinheit zu übertragen. Eine Steuereinrichtung des Küchengerätes steuert beispielsweise zumindest teilautomatisch einen Zubereitungsprozess einer Speise.

Die aus dem Stand der Technik bekannten Küchengeräte weisen allerdings den Nachteil auf, dass eine Zubereitung von Speisen nur mit dem dafür vorgesehenen Zubereitungsgefäß durchgeführt werden kann.

Der Erfindung liegt daher die Aufgabe zu Grunde, den Funktionsumfang von Küchengeräten zu erweitern.

Die vorgenannte Aufgabe ist mit einem Kochstellenmodul gemäß Anspruch 1 gelöst. Das Kochstellenmodul weist mindestens eine Stellfläche für mindestens ein Kochgefäß auf. Mindestens ein Kochgefäß ist auf der Stellfläche positionierbar, so dass das Kochgefäß mit gegebenenfalls darin angeordneten Speisen durch das elektrische Heizmittel, das unterhalb bzw. in der Stellfläche angeordnet ist, aufheizbar ist. Die Stellfläche ist vorzugsweise zumindest teilweise aus Glas und/oder Glaskeramik ausgebildet.

Das erfindungsgemäße Kochstellenmodul ist zum Verbinden mit einer Küchengerätebasis vorgesehen. Die Küchengerätebasis weist vorzugsweise ein Gehäuse mit mindestens einem Aufnahmebereich, insbesondere zur Aufnahme eines Zubereitungsgefäßes, mindestens einen Elektromotor, mindestens eine Wiegeeinrichtung, insbesondere im Aufnahmebereich, und eine Spannungsversorgung auf. Bevorzugt ist im Aufnahmebereich der Küchengerätebasis mindestens ein Gegenkontaktmittel zur Herstellung einer elektrischen Verbindung mit dem Kontaktmittel des Kochstellenmoduls bzw. von Kontaktmitteln eines Zubereitungsgefäßes vorgesehen.

Des Weiteren ist im Aufnahmebereich vorzugsweise mindestens eine Antriebsschnittstelle zur Übertragung einer von dem Elektromotor bewirkten Drehbewegung vorgesehen. Diese Antriebsschnittstelle wird beim Betrieb mit einem Zubereitungsgefäß zum Antrieb einer Rühr- und Zerkleinerungseinheit verwendet. Die Küchengerätebasis weist zudem insbesondere eine Steuereinrichtung auf, mit der insbesondere der Elektromotor und die elektrische Gegenkontaktstelle steuerbar sind. Die Steuereinrichtung umfasst vorzugsweise eine Leistungselektronik, um mindestens ein an dem Gegenkontaktmittel angeschlossenes Heizmittel zu betreiben.

Das elektrische Heizmittel des Kochstellenmoduls ist über das elektrische Kontaktmittel elektrisch mit der Küchengerätebasis, insbesondere der Spannungsversorgung der Küchengerätebasis, verbunden, wenn das Kochstellenmodul mit seinem Verbindungsbereich in einen Aufnahmebereich der Küchengerätebasis eingebracht ist. Das Heizmittel des Kochstellenmoduls wird über das elektrische Kontaktmittel mit Spannung versorgt. Vorzugsweise ist das elektrische Kontaktmittel derart angeordnet, dass es automatisch mit dem Gegenkontaktmittel der Küchengerätebasis kontaktiert wird, wenn das Kochstellenmodul mit seinem Verbindungsbereich in den Aufnahmebereich der Küchengerätebasis eingebracht wird. Das Kochstellenmodul ist folglich in den Aufnahmebereich der Küchengerätebasis einsetzbar und auch aus diesem herausnehmbar. Der Verbindungsbereich ist vorzugsweise derart ausgebildet, dass er in den auch zur Aufnahme eines Zubereitungsgefäßes vorgesehenen Aufnahmebereich der Küchengerätebasis einsetzbar ist. Der Verbindungsbereich ist insbesondere formschlüssig in den Aufnahmebereich einsetzbar.

Über die Steuereinrichtung der Küchengerätebasis sind die elektrischen Gegenkontaktmittel ansteuerbar, so dass zumindest das Heizmittel des Kochstellenmoduls über die Steuereinrichtung der Küchengerätebasis steuerbar ist. Insbesondere ist das Heizmittel des Kochstellenmoduls folglich über die Bedienelemente der Küchengerätebasis steuerbar.

Das elektrische Kontaktmittel des Kochstellenmoduls weist beispielsweise mindestens drei Steckerstifte auf, die in das als korrespondierende Kontaktbuchsen ausgebildete Gegenkontaktmittel der Küchengerätebasis eintreten, um eine elektrische Verbindung herzustellen. Es ist aber auch vorgesehen, dass die Kontaktmittel als Kontaktflächen, bogenförmige Federelemente oder Kontaktringe ausgebildet sind.

Die Erfindung weist gegenüber dem Stand der Technik den Vorteil auf, dass sich das Anwendungsspektrum der Küchengerätebasis erweitert, da mit dem Kochstellenmodul Kochgefäße unterschiedlicher Größe und Art auf der Küchengerätebasis verwendbar sind. Das Kochstellenmodul benötigt keine eigene Steuerung und Leistungselektronik, sondern es werden die vorhandenen Komponenten der Küchengerätebasis verwendet, indem das elektrische Kontaktmittel mit den Gegenkontaktmitteln der Küchengerätebasis verbunden wird. Um die Heizleistung des Heizmittels vorteilhaft regeln zu können, ist gemäß einer ersten Ausgestaltung des Kochstellenmoduls vorgesehen, dass mindestens ein Sensor, insbesondere mindestens ein Temperatursensor, z. B. ein Thermoelement, vorhanden ist. Beispielsweise sind eine Mehrzahl von Sensoren, insbesondere Temperatursensoren, vorgesehen. Vorzugsweise ist der Temperatursensor zur Messung der Oberflächentemperatur der Stellfläche angeordnet. Mit dem Temperatursensor wird folglich die Oberflächentemperatur der Stellfläche überwacht und die Heizleistung des Heizmittels kann entsprechend einer gewünschten Zieltemperatur geregelt werden.

Für eine vorteilhafte Regelung der Heizleistung hat sich gemäß einer weiteren Ausgestaltung des Kochstellenmoduls als vorteilhaft herausgestellt, wenn vorgesehen ist, dass das Kochstellenmodul mindestens eine Signalschnittstelle zur Übertragung elektrischer Signale an eine Gegensignalschnittstelle der Küchengerätebasis aufweist. Die Gegensignalschnittstelle ist insbesondere mit der Steuereinrichtung der Küchengerätebasis verbunden.

Vorzugsweise übermittelt die Signalschnittstelle beispielsweise die Messsignale des mindestens einen Temperatursensors, vorzugsweise einer Mehrzahl von Temperatursensoren, an die Küchengerätebasis, insbesondere an die Steuereinrichtung der Küchengerätebasis. Die Signalschnittstelle ist vorzugsweise identisch wie das elektrische Kontaktmittel ausgebildet, so dass das elektrische Kontaktmittel beispielsweise drei Kontaktstecker und die Signalschnittstelle zwei weitere - identisch ausgebildete - Kontaktstecker aufweist, um elektrische Signale an die Küchengerätebasis zu übertragen. Vorzugsweise ist die Signalschnittstelle zur Übertragung von Daten ausgebildet und eingerichtet.

Beispielsweise wird über die Signalschnittstelle die Temperatur der Oberfläche der Stellfläche an die Steuereinrichtung der Küchengerätebasis übermittelt und die Steuereinrichtung regelt auf Basis einer vom Benutzer bestimmbaren Zieltemperatur die Heizleistung des Heizmittels des Kochstellenmoduls über das elektrische Kontaktmittel.

Beispielsweise um eine Rührfunktion innerhalb eines Kochgefäßes realisieren zu können, ist gemäß einer weiteren Ausgestaltung des Kochstellenmoduls vorgesehen, dass das Kochstellenmodul mindestens eine Kupplung zur Übertragung eines Drehmomentes, insbesondere mindestens eine Magnetkupplung, aufweist. Die Kupplung ist vorzugsweise in oder unterhalb der Stellfläche angeordnet. Insbesondere weist die Kupplung mindestens einen rotierbar gelagerten Magneten auf. Innerhalb eines Kochgefäßes ist dann ein korrespondierender Magnet mit mindestens einem Rührflügel anordenbar. Durch die Rotation des rotierbar gelagerten Magneten wird der in dem Kochgefäß angeordnete Magnet mitgenommen und der Rührflügel rotiert, beispielsweise um ein Anbrennen von Speisen in dem Kochgefäß zu verhindern.

Es ist vorgesehen, dass die Kupplung, insbesondere die Magnetkupplung, von mindestens einen Motor angetrieben wird, der innerhalb des Kochstellenmoduls angeordnet ist. Der Motor wird beispielsweise über das elektrische Kontaktmittel mit Spannung versorgt und/oder ist über die Signalschnittstelle steuerbar, insbesondere von der Steuereinrichtung der Küchengerätebasis. Es ist auch vorgesehen, dass die Kupplung über die Antriebsschnittstelle der Küchengerätebasis von dem Elektromotor der Küchengerätebasis in eine Drehbewegung versetzbar ist.

Als vorteilhaft hat sich gemäß einer weiteren Ausgestaltung herausgestellt, wenn vorgesehen ist, dass das Heizmittel mindestens ein elektrisches Strahlungsheizmittel, insbesondere einen keramisch isolierten Heizleiter, und/oder mindestens ein Induktionsheizmittel und/oder mindestens ein Dickschichtheizmittel aufweist. Besonders bevorzugt ist das Heizmittel als Induktionsheizmittel ausgebildet und unterhalb bzw. in der Stellfläche angeordnet. Auf diese Weise können für Induktionsheizmittel geeignete Kochgefäße auf der Stellfläche angeordnet und mit dem Heizmittel erwärmt werden.

Eine weitere Ausgestaltung des Kochstellenmoduls sieht vor, dass das Heizmittel mindestens zwei Heizzonen in der Stellfläche aufweist, und dass die Heizzonen separat ansteuerbar sind. Vorzugsweise weisen die zwei Heizzonen separate elektrische Kontaktmittel auf, um separat von einer Steuereinrichtung der Küchengerätebasis steuerbar zu sein. Die Heizzonen befinden sich in der Stellfläche für mindestens ein einziges Kochgefäß oder die zwei Heizzonen sind nebeneinander angeordnet, so dass zwei separate Kochgefäße nebeneinander mit den unterschiedlichen Heizzonen des Heizmittels unabhängig voneinander erwärmbar sind.

Besonders bevorzugt ist gemäß einer weiteren Ausgestaltung des Kochstellenmoduls, wenn die Stellfläche vollständig eben ausgebildet ist. Auf einer vollständig ebenen Stellfläche kann ein üblicher Kochtopf angeordnet und mit dem Heizmittel erwärmt werden. Ferner ist vorgesehen, dass die Stellfläche zumindest teilweise konvex ausgebildet ist. Eine teilweise konvex ausgebildete Stellfläche weist den Vorteil auf, dass ein zur Form der Stellfläche korrespondierendes Kochgefäß auf der konvexen Stellfläche anordenbar ist und formschlüssig auf der Stellfläche gehalten wird, ohne beispielsweise seitlich zu verrutschen. Des Weiteren ist z. B. vorgesehen, dass die Stellfläche einen konvex gewölbten Ring aufweist, der das seitliche Abrutschen eines Kochgefäßes von der ansonsten eben ausgebildeten Stellfläche verhindert.

Eine Weiterbildung sieht vor, dass die Stellfläche zumindest teilweise konkav ausgebildet ist. Eine konkave Stellfläche ist insbesondere bei der Verwendung von einem Wok als Kochgefäß vorteilhaft. Die Form des Woks fügt sich in die konkav gewölbte Stellfläche ein. Alternativ oder zusätzlich ist vorgesehen, wenn die Stellfläche eine Mehrzahl flexibler Ringflächen oder eine Mehrzahl flexibel gelagerter Ringflächen aufweist. Durch die flexiblen Ringflächen bzw. die flexibel gelagerten Ringflächen passt sich die Stellfläche automatisch an die Form des Kochgefäßes an. Wird ein vollständig ebenes Kochgefäß verwendet, verformen sich die Ringflächen nicht. Wird beispielsweise ein Wok verwendet, passen sich die flexiblen Ringflächen oder die flexibel gelagerten Ringflächen an die Form der Unterseite des Kochgefäßes an.

Vorzugsweise um das Kochstellenmodul an der Küchengerätebasis zu befestigen, ist gemäß einer weiteren Ausgestaltung vorgesehen, dass mindestens ein Haltebereich, vorzugsweise zwei Haltebereiche, zum Zusammenwirken mit mindestens einem Haltearm, vorzugsweise mit zwei Haltearmen, der Küchengerätebasis vorgesehen sind. Insbesondere weist die Küchengerätebasis zwei jeweils um ihre Längsachse rotierbare Haltearme auf. Durch das Rotieren um ihre Längsachse werden die Haltearme zwischen einer Freigabeposition und einer Verriegelungsposition verschwenkt. In der Verriegelungsposition greifen die Haltearme derart formschlüssig in die Haltebereiche des Kochstellenmoduls ein, dass das Kochstellenmodul nicht aus der Küchengerätebasis entnehmbar ist. Auf diese Weise wird sichergestellt, dass das Kochstellenmodul, insbesondere der Verbindungsbereich, bei der Verwendung nicht aus dem Aufnahmebereich der Küchengerätebasis heraustreten kann.

Die eingangs genannte Aufgabe ist ferner durch ein Kochsystem gelöst, das eine Küchengerätebasis mit mindestens einem Aufnahmebereich, mindestens einer Steuereinrichtung und mindestens einer Spannungsversorgung sowie ein Kochstellenmodul nach einem der vorstehenden Ausführungsbeispiele aufweist. Die Küchengerätebasis ist beispielsweise wie vorstehend beschrieben ausgebildet. Das Kochstellenmodul ist mit seinem Verbindungsbereich in dem Aufnahmebereich der Küchengerätebasis anordenbar bzw. ist darin angeordnet.

Wenn das Kochstellenmodul mit seinem Verbindungsbereich in dem Aufnahmebereich angeordnet ist, sind vorzugsweise automatisch auch die elektrischen Kontaktmittel sowie die Signalschnittstelle des Kochstellenmoduls mit entsprechenden Gegenkontaktmitteln bzw. Gegensignalschnittstellen der Küchengerätebasis verbunden. Auf diese Weise kann eine Bedienung des Kochstellenmoduls über eine Bedieneinrichtung der Küchengerätebasis erfolgen. Die Küchengerätebasis weist zwei um ihre Längsachse rotierbare Haltearme auf, die - wie vorstehend beschrieben - das Kochstellenmodul an der Küchengerätebasis festlegen können.

Weitere vorteilhafte Ausgestaltungen der Erfindung ergeben sich aus der folgenden Figurenbeschreibung und den abhängigen Unteransprüchen. Es zeigen:
- Fig. 1: ein Ausführungsbeispiel eines Kochstellenmoduls in teilweise geschnittener Ansicht,
- Fig. 2: ein Ausführungsbeispiel eines Kochsystems in perspektivischer Ansicht,
- Fig. 3: ein weiteres Ausführungsbeispiel eines Kochsystems in perspektivischer Ansicht und
- Fig. 4a - 4c: Ausführungsbeispiele von Kochstellenmodulen in teilweise geschnittener Ansicht.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

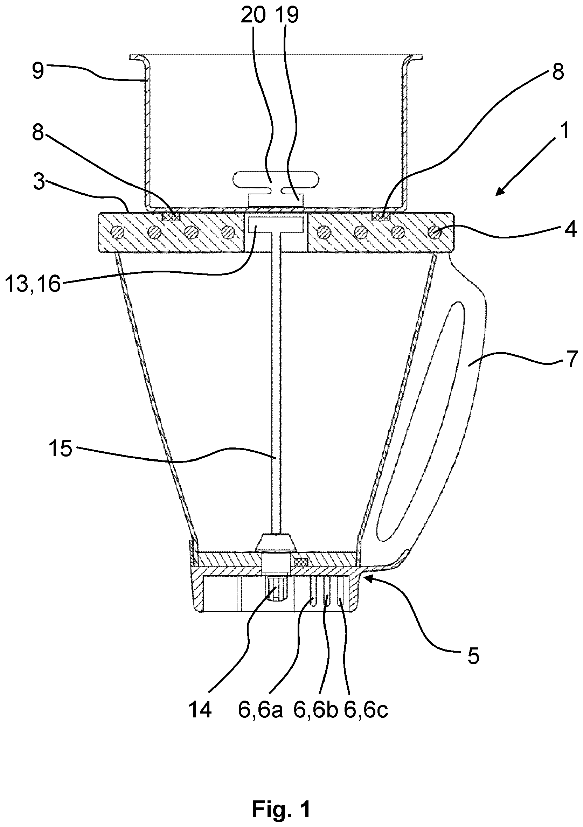

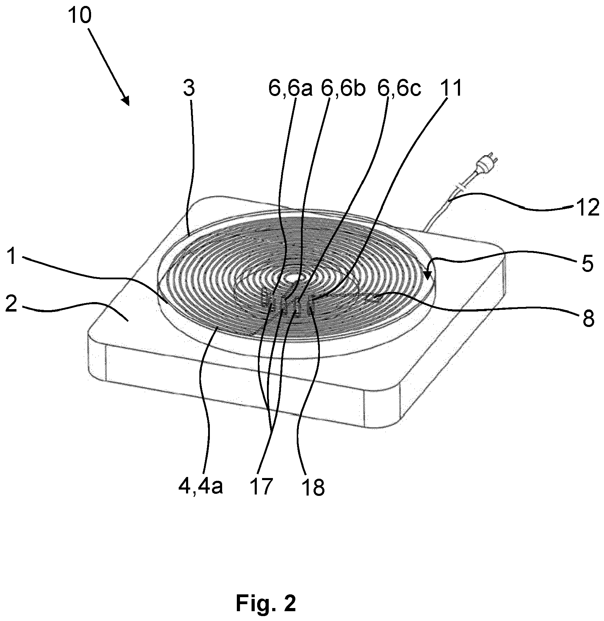

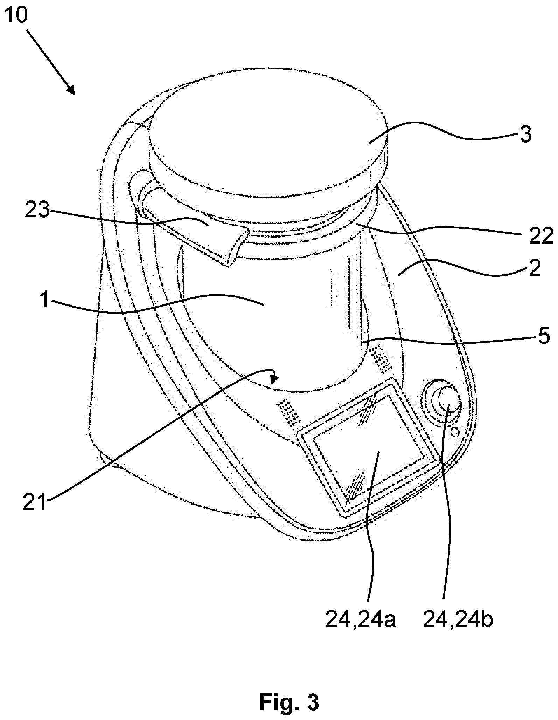

Fig. 1 zeigt ein Ausführungsbeispiel eines Kochstellenmoduls 1 in zumindest teilweise geschnittener Seitenansicht. Das Kochstellenmodul 1 ist zum Verbinden mit einer - beispielhaft in den Fig. 2 und Fig. 3 dargestellten - Küchengerätebasis 2 vorgesehen. Das Kochstellenmodul 1 weist eine Stellfläche 3 für mindestens ein Kochgefäß 9 auf, das hier als Kochtopf ausgebildet ist. Bei dem Ausführungsbeispiel der Fig. 1 ist die Stellfläche 3 vollständig eben und zumindest teilweise aus einer Glaskeramik ausgebildet. Unterhalb der Stellfläche 3 ist ein elektrisches Heizmittel 4 angeordnet, das bei diesem Ausführungsbeispiel als Induktionsheizmittel ausgebildet ist.

Zum Verbinden des Kochstellenmoduls 1 mit einer Küchengerätebasis 2 weist das Kochstellenmodul 1 einen Verbindungsbereich 5 auf. In dem Verbindungsbereich 5 ist das elektrische Kontaktmittel 6 in Form von drei Kontaktstiften 6a, 6b, 6c angeordnet. Wird das Kochstellenmodul 1 mit seinem Verbindungsbereich 5 in eine Küchengerätebasis 2 eingesetzt, wird auch das elektrische Kontaktmittel 6 automatisch mit einem - in Fig. 2 dargestellten - Gegenkontaktmittel 17 der Küchengerätebasis 2 kontaktiert. Über das elektrische Kontaktmittel 6 wird das Heizmittel 4 elektrisch kontaktiert und mit Spannung versorgt. Zur einfachen Handhabung weist das Kochstellenmodul 1 einen Handgriff 7 auf, der dazu dient, das Kochstellenmodul 1 in die Küchengerätebasis 2 einzusetzen oder aus dieser herauszunehmen.

Gemäß Fig. 1 sind in der Stellfläche 3 zwei Sensoren 8 angeordnet, die bei diesem Ausführungsbeispiel als Thermoelemente ausgebildet sind. Mit den Sensoren 8 ist die Oberflächentemperatur der Stellfläche 3 ermittelbar. Die Messsignale der Sensoren 8 sind über eine - beispielshaft in Fig. 2 dargestellte - Signalschnittstelle 11 - über eine Gegensignalschnittstelle der Küchengerätebasis 2 - an eine Steuereinrichtung der Küchengerätebasis 2 übermittelbar. Die Steuereinrichtung regelt beispielsweise die Heizleistung des Heizmittels 4, um mit einem auf der Stellfläche 3 positionierten Kochgefäß 9 eine vorbestimmte Oberflächentemperatur zu erreichen.

Fig. 2 zeigt ein Ausführungsbeispiel eines Kochstellenmoduls 1 mit einer Küchengerätebasis 2, die zusammen ein Kochsystem 10 bilden. Das Kochstellenmodul 1 ist zum einfacheren Verständnis des Ausbaus zumindest teilweise transparent dargestellt. Das Kochstellenmodul 1 ist mit dem Verbindungsbereich 5 mit der Küchengerätebasis 2 verbunden. Unterhalb der Stellfläche 3 für mindestens ein Kochgefäß 9 ist das Heizmittel 4 angeordnet, das bei diesem Ausführungsbeispiel eine Heizzone 4a aufweist. Das Heizmittel 4 ist über das elektrische Kontaktmittel 6 elektrisch über das Gegenkontaktmittel 17 mit der Küchengerätebasis 2 verbunden. Das Gegenkontaktmittel 17 ist mit der Steuereinrichtung, einschließlich einer Leistungselektronik, der Küchengerätebasis 2 verbunden.

Zudem weist das Kochstellenmodul 1 einen als Temperatursensor ausgebildeten Sensor 8 unterhalb der Stellfläche 3 auf, der mit einer Signalschnittstelle 11 mit einer Gegensignalschnittstelle 18 der Küchengerätebasis 2 kontaktiert ist. Die Messsignale des Sensors 8 werden so an die Steuereinrichtung der Küchengerätebasis 2 übermittelt. Die Küchengerätebasis 2 weist bei diesem Ausführungsbeispiel eine Spannungsversorgung 12 in Form eines elektrischen Anschlusssteckers auf.

Bei dem Ausführungsbeispiel der Fig. 1 weist das Kochstellenmodul 1 eine als Magnetkupplung ausgebildete Kupplung 13 zur Übertragung eines Drehmomentes auf. Bei diesem Ausführungsbeispiel umfasst die Kupplung 13 eine mechanische Schnittstelle 14, die formschlüssig mit einer Antriebsschnittstelle - nicht dargestellt - der Küchengerätebasis 2 koppelbar ist. Über die mechanische Schnittstelle 14 ist eine Rotation eines Elektromotors der Küchengerätebasis 2 auf einen Koppelstab 15 übertragbar. Am Koppelstabs 15 ist ein Magnetkopf 16 angeordnet, der über den Koppelstab 15 in eine Rotationsbewegung versetzbar ist. In einem Kochgefäß 9 ist ein Gegenmagnet 19 anordenbar, der mit einem Rührflügel 20 gekoppelt ist, um beispielsweise ein Rühren einer in dem Kochgefäß 9 angeordneten, flüssigen Speise zu verhindern.

Fig. 3 zeigt ein weiteres Ausführungsbeispiel eines Kochstellenmoduls 1 in einer Küchengerätebasis 2, die zusammen ein Kochsystem 10 ausbilden. Das Kochstellenmodul 1 ist mit seinem Verbindungsbereich 5 in einen korrespondierenden Aufnahmebereich 21 der Küchengerätebasis 2 eingesetzt. Unterhalb der Stellfläche 3 ist bei diesem Ausführungsbeispiel ein umlaufender Kragen als Haltebereich 22 ausgebildet. Der Haltebereich 22 wirkt mit zwei rotierbaren und gegenüberliegend angeordneten Haltearmen 23 - nur ein Haltearm 23 in Fig. 3 sichtbar - der Küchengerätebasis 2 zusammen. Die Haltearme 23 sind zwischen einer - in Fig. 3 dargestellten - Verriegelungsposition und einer - nicht dargestellten - Freigabeposition um ihre Längsachse verschwenkbar. In der dargestellten Verriegelungsposition der Haltearme 23 kann das Kochstellenmodul 1 nicht aus der Küchengerätebasis 2 entnommen werden.

Dadurch, dass das Kochstellenmodul 1 mit der Küchengerätebasis 2 auch elektrisch kontaktiert ist, können sämtliche Funktionen des Kochstellenmoduls 1 über die Bedieneinrichtung 24, insbesondere Touch-Display 24a und Drehtaster 24b, der Küchengerätebasis 2 gesteuert werden.

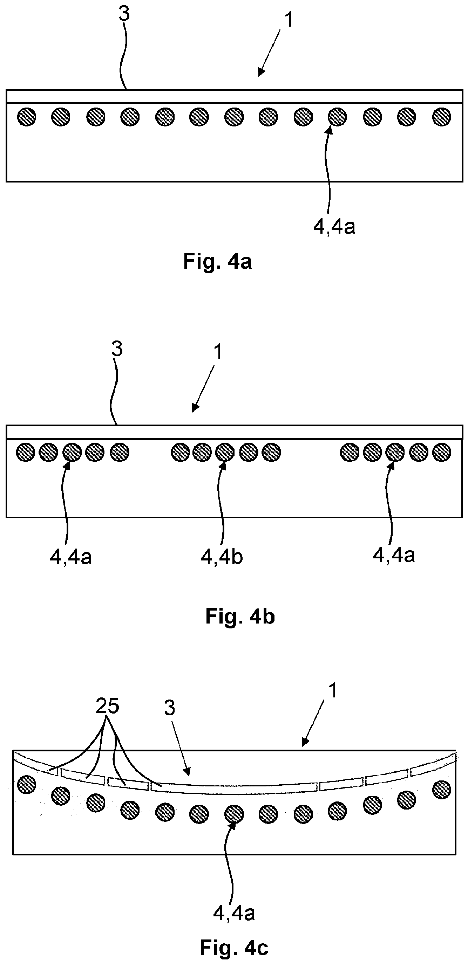

Fig. 4a bis Fig. 4c zeigen Ausführungsbeispiele von Kochstellenmodulen 1 in teilweise geschnittener Seitenansicht.

Gemäß Fig. 4a weist das Heizmittel 4 eine einzige Heizzone 4a auf. Die Stellfläche 3 ist vollständig eben ausgebildet.

Bei dem Ausführungsbeispiel der Fig. 4b ist die Stellfläche 3 ebenfalls eben ausgebildet. Das Heizmittel 4 weist zwei separat voneinander ansteuerbare Heizzonen 4a, 4b auf.

Bei dem Ausführungsbeispiel der Fig. 4c ist die Stellfläche 3 konkav ausgebildet und weist eine Mehrzahl flexibler Ringflächen 25 auf. Ein derartiges Ausführungsbeispiel eines Kochstellenmoduls 1 ist vorteilhaft mit einem Wok verwendbar. Das Heizmittel 4 weist lediglich eine Heizzone 4a auf.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Kochstellenmodul
- 2: Küchengerätebasis
- 3: Stellfläche
- 4: Heizmittel
- 4a: Erste Heizzone
- 4b: Zweite Heizzone
- 5: Verbindungsbereich
- 6: Kontaktmittel
- 6a-c: Kontaktstifte
- 7: Handgriff
- 8: Sensoren
- 9: Kochgefäß
- 10: Kochsystem
- 11: Signalschnittstelle
- 12: Spannungsversorgung
- 13: Kupplung
- 14: Mechanische Schnittstelle
- 15: Koppelstab
- 16: Magnetkopf
- 17: Gegenkontaktmittel
- 18: Gegensignalschnittstelle
- 19: Gegenmagnet
- 20: Rührflügel
- 21: Aufnahmebereich
- 22: Haltebereich
- 23: Haltearme
- 24: Bedieneinrichtung
- 24a: Touch-Display
- 24b: Drehtaster
- 25: Ringfläche

## Patentansprüche

1. Kochstellenmodul (1) zum Verbinden mit einer Küchengerätebasis (2), aufweisend mindestens eine Stellfläche (3) für mindestens ein Kochgefäß (9), mindestens ein elektrisches Heizmittel (4), mindestens einen Verbindungsbereich (5) zur Aufnahme an der Küchengerätebasis (2) und mindestens ein elektrisches Kontaktmittel (6), wobei mit dem Heizmittel (4) ein auf der Stellfläche (3) positionierbares Kochgefäß (9) erwärmbar ist, und wobei das Heizmittel (4) über das elektrische Kontaktmittel (6) elektrisch mit der Küchengerätebasis (2) verbindbar ist.

2. Kochstellenmodul (1) nach Anspruch 1,
**dadurch gekennzeichnet, dass**
mindestens ein Sensor (8), insbesondere mindestens ein Temperatursensor, vorgesehen ist, insbesondere dass der Temperatursensor zur Messung der Oberflächentemperatur der Stellfläche (3) angeordnet ist.

3. Kochstellenmodul (1) nach Anspruch 1 oder 2,
**dadurch gekennzeichnet, dass**
mindestens eine Signalschnittstelle (11) zur Übertragung elektrischer Signale an eine Gegensignalschnittstelle (18) der Küchengerätebasis (2) vorgesehen ist, insbesondere dass die Signalschnittstelle (11) mit mindestens einem Sensor (8), vorzugsweise mindestens einem Temperatursensor, verbunden ist.

4. Kochstellenmodul (1) nach einem der Ansprüche 1 bis 3,
**dadurch gekennzeichnet, dass**
mindestens eine Kupplung (13) zur Übertragung einer Drehbewegung, insbesondere mindestens eine Magnetkupplung, vorgesehen ist.

5. Kochstellenmodul (1) nach einem der Ansprüche 1 bis 4,
**dadurch gekennzeichnet, dass**
das Heizmittel (4) mindestens ein elektrisches Strahlungsheizmittel, insbesondere einen keramisch isolierten Heizleiter, und/oder mindestens ein Induktionsheizmittel und/oder mindestens ein Dickschichtheizmittel aufweist.

6. Kochstellenmodul (1) nach einem der Ansprüche 1 bis 5,
**dadurch gekennzeichnet, dass**
das Heizmittel (1) mindestens zwei Heizzonen (4a, 4b) in der Stellfläche (3) aufweist, und dass die Heizzonen (4a, 4b) separat ansteuerbar sind, bevorzugt dass die Heizzonen (4a, 4b) separate elektrische Kontaktmittel (6) aufweisen.

7. Kochstellenmodul (1) nach einem der Ansprüche 1 bis 6,
**dadurch gekennzeichnet, dass**
die Stellfläche (3) vollständig eben oder zumindest teilweise konvex oder zumindest teilweise konkav ausgebildet ist und/oder dass die Stellfläche (3) eine Mehrzahl flexibler Ringflächen (25) oder eine Mehrzahl flexibel gelagerter Ringflächen (25) aufweist.

8. Kochstellenmodul (1) nach einem der Ansprüche 1 bis 7,
**dadurch gekennzeichnet, dass**
mindestens ein Haltebereich (22), vorzugsweise zwei Haltebereiche (22), zum Zusammenwirken mit mindestens einem Haltearm (23), vorzugsweise mit zwei Haltearmen (23), der Küchengerätebasis (2) vorgesehen sind.

9. Kochsystem (10), aufweisend mindestens eine Küchengerätebasis (2), wobei die Küchengerätebasis (2) mindestens einen Aufnahmebereich (21), mindestens eine Steuereinrichtung und mindestens eine Spannungsversorgung (12) aufweist,
**dadurch gekennzeichnet, dass**
ein Kochstellenmodul (1) nach einem der Ansprüche 1 bis 8 umfasst ist, dass das Kochstellenmodul (1) mit seinem Verbindungsbereich (5) in dem Aufnahmebereich (21) der Küchengerätebasis (2) anordenbar ist.

10. Kochsystem (10) nach Anspruch 9,
**dadurch gekennzeichnet, dass**
dass die elektrischen Kontaktmittel (6) des Kochstellenmoduls (1) mit elektrischen Gegenkontaktmitteln (17) der Küchengerätebasis (2) zur Spannungsversorgung des Heizmittels (4) kontaktierbar sind.

11. Kochsystem (10) nach Anspruch 9 oder 10,
**dadurch gekennzeichnet, dass**
die Küchengerätebasis (2) zwei Haltearme (23), insbesondere zwei rotierbare Haltearme (23) aufweist, und dass die Haltearme (23) mit mindestens einem Haltebereich (22), insbesondere zwei Haltebereichen (22), an dem Kochstellenmodul (1) zusammenwirken können, um das Kochstellenmodul (1) im Aufnahmebereich (21) zu fixieren.
